# EUROPEAN PATENT SPECIFICATION

(11) **EP 1 160 280 B1**
(45) Date of publication and mention of the grant of the patent: **12.12.2007**
(21) Application number: 01112872.5
(22) Date of filing: 31.05.2001
(51) Int. Cl.: C08L 9/00, B32B 25/16

(54) **Rubber composition for laminate having improved anti-fracture characteristics**
Kautschukzusammensetzung für Laminate mit verbesserten Brucheigenschaften
Composition de caoutchouc pour structure laminée ayant des caractéristiques de fracturation améliorées

(30) Priority: 02.06.2000 JP 2000165797
(43) Date of publication of application: 05.12.2001
(73) Proprietor: THE YOKOHAMA RUBBER CO., LTD., Tokyo (JP)
(72) Inventor: Miyaji, Jun, c/o The Yokohama Rubber Co., Ltd.c/, Hiratsuka City, Kanagawa Pref. (JP); Shimada, Jun, c/o The Yokohama Rubber Co., Ltd. c, Hiratsuka City, Kanagawa Pref. (JP)
(74) Representative: Vossius & Partner

(56) References cited:
- EP-A- 0 955 335
- US-A- 4 131 634
- US-A- 5 128 395
- US-A- 5 644 000

## Description

The present invention relates to a rubber composition for a laminate having improved anti-fracture characteristics.

In recent years, an absorption device of vibrational energy, such as vibration prevention device, vibration removal device or seismic isolation device, is rapidly spreading. For example, a seismic isolation rubber device comprising a rubber composition and a hard plate alternately laminated is used for e.g. supports of bridges or base seismic isolation of buildings.

This results in that by forming a laminate (rubber laminate) of a rubber composition and a hard plate, the laminate is very hard in upper and lower directions and is soft in a horizontal direction, that is, shear rigidity is decreased, to thereby make inherent vibration cycle of buildings deviate from vibration cycle of earthquake. Thus, acceleration buildings receive from earthquake is minimized.

In order to improve anti-fracture characteristics of a rubber laminate, it is necessary to further increase breaking strength and shear strain at fracture of the rubber laminate.

Conventionally, in a case where it is intended to improve anti-fracture characteristics of a rubber laminate, a method is taken, for example, which shifts shear strain at fracture into high strain side by lowering stress at high strain side of the rubber. Hereafter, the explanation is given on the anti-fracture characteristics of a rubber laminate with the accompanying drawing.

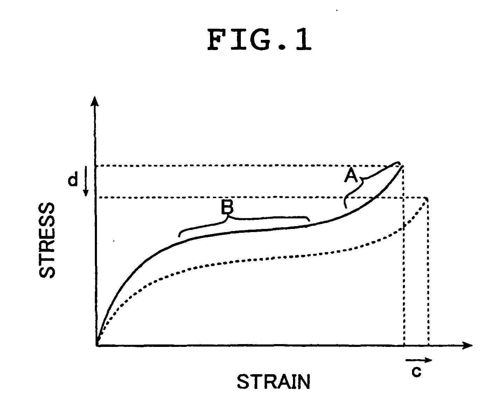

Fig. 1 is a graph showing the relationship between shear strain and stress, of a rubber laminate generated by a load when the load is applied to a rubber laminate from one side thereof, in which a horizontal axis represents shear strain and a vertical axis represents stress. The solid line is a stress-strain curve of a conventional rubber laminate. When stress at high strain side (shown by region A in the figure) is lowered in order to improve anti-fracture characteristics of a rubber laminate by a conventional method of, for example, compounding carbon black or oils, a stress-strain curve of such a rubber laminate is a curve shown by a dotted line, and shear strain at fracture shifts into high strain side as shown in an arrow c in the figure.

However, if it is intended to improve anti-fracture characteristics of a rubber laminate by such a conventional method, stress at high strain side lowers, and at the same time, stress of the whole stress-strain curve tends to lower. For example, there is a problem in that shear strength of a laminate lowers as shown in an arrow d in the figure. Further, there is a problem in that when stress at high strain side is lowered, stress at low strain side (shown by region B in the figure) simultaneously lowers, and this results in lowering modulus of elasticity in shear of the laminate.

In view of the above, there is demanded to provide a rubber composition that can further increase shear strain at fracture by maintaining stress at low strain region and lowering stress at high strain region without impairing modulus of elasticity in shear and breaking strength of a rubber laminate.

An object of the present invention is to provide a rubber composition for a laminate having improved anti-fracture characteristics, which has good modulus of elasticity in shear, good breaking strength, and large shear strain at fracture.

The present invention provides a rubber composition for a laminate as described in claim 1.

In the accompanying drawing:
Fig. 1 is a schematic diagram showing a stress-strain curve of a rubber laminate.

The present invention is described in detail below.

A rubber composition for a laminate having improved anti-fracture characteristics of the present invention (hereinafter referred to as a composition of the present invention), contains a rubber component comprising a diene-based rubber, wherein the rubber component contains 10 to 100% by weight of an isoprene rubber.

Examples of the diene-based rubber other than isoprene rubber (IR), contained in the composition of the present invention include natural rubber (NR), butadiene rubber (BR), styrene-butadiene copolymer rubber (SBR), acrylonitrile-butadiene copolymer rubber (NBR), butyl rubber (IIR), halogenated butyl rubber (Br-IIR, Cl-IIR) and chloroprene rubber (CR).

Of those, NR is preferable from the standpoint of having good balance in e.g mechanical strength, damping properties and processability.

The composition of the present invention contains isoprene rubber (IR) in the rubber component. By containing isoprene rubber, only stress at high strain can be lowered without lowering stress at low strain of the rubber composition. That is, strain dependency of stress generated by strain can be decreased. When the composition of the present invention containing isoprene rubber as a rubber component is used in a rubber laminate, in comparison with conventional rubber laminates, shear strain at fracture can be increased without lowering modulus of elasticity in shear and breaking strength, and thus anti-fracture characteristics can be improved.

The content of isoprene rubber contained in the composition of the present invention is 10 to 100% by weight, preferably 30 to 50% by weight, in the rubber component. When the isoprene rubber is contained in such a range, the composition of the present invention obtained can decrease only shear stress at high strain side while maintaining shear stress at low strain side.

The isoprene rubber (IR) contains cis-1,4-polyisoprene in an amount of 91 to 92% in terms of isoprene unit. When the isoprene rubber containing cis-1,4-polyisoprene in the above range is used, the composition of the present invention obtained is that the proportion of increase of shear stress to shear strain is further reduced, and stress at high strain side further lowers.

The rubber component in the composition of the present invention preferably comprises the above isoprene rubber (IR) and natural rubber (NR). However, the rubber component in the composition of the present invention may consist of only the above isoprene rubber.

The rubber component has a composition of NR:IR=90:10 to 0:100 (weight ratio), preferably NR:IR=70:30 to 50:50 (weight ratio).

The composition of the present invention containing the natural rubber and the isoprene rubber in the above range as the rubber component has high tensile strength and high mechanical strength, and also has excellent anti-fracture characteristics.

The rubber composition of the present invention contains carbon black as reinforcing agent, the amount of carbon black compounded being 10 to 100 parts by weight per 100 parts by weight of the diene-based rubber.

Examples of the carbon black preferably used are carbon blacks of, for example, FT, SRF, GPF, FEF, HAF, ISAF and SAF classes.

In producing the composition of the present invention, in addition to the rubber component comprising a diene-based rubber and carbon black, various additives such as additional reinforcing agents, fillers, vulcanizing agents, vulcanization accelerators, plasticizers, softening agents, and antioxidants can be compounded in the range that the characteristic of the present invention is not impaired in the unvulcanized state.

Examples of the additional reinforcing agent and filler include silica, calcium carbonate, clay, talc and phenolic resin.

Examples of the vulcanizing agent include sulfur; sulfur-containing organic compounds such as tetramethyl thiuram disulfide (TMTD), tetraethyl thiuram disulfide (TETD) and dipentamethylene thiuram disulfide (DPTT); organic peroxides such as dicumyl peroxide; metal oxides such as zinc white and magnesia; and quinone dioxime. Such a vulcanizing agent can be compounded in an optional amount in order to obtain the desired physical properties, but the amount thereof is preferably 1.0 to 4.5 parts by weight per 100 parts by weight of the diene-based rubber.

Examples of the vulcanization accelerator include thiazoles such as mercaptobenzothiazole (MBT); sulfenamides such as N-cyclohexyl-2-benzothiazole sulfenamide (CBS); and guanidines such as diphenyl guanidine. The amount of such a vulcanization accelerator compounded is preferably 0.5 to 5.0 parts by weight per 100 parts by weight of the diene-based rubber.

Examples of the plasticizer and softening agent include synthetic plasticizers such as process oil, petroleum resin, dioctyl phthalate (DOP) and dioctyl sebacate (DOS); and softening agents such as mineral oil-based softening agent, plant oil-based softening agent and liquid rubber. The amount of the plasticizer and softening agent compounded is not particular limited, and those plasticizer and softening agent can optionally be compounded in an amount necessary for obtaining the desired physical properties. However, in general, the amount is preferably 0 to 50 parts by weight per 100 parts by weight of the diene-based rubber.

Examples of the antioxidant include N-(1,3-dimethylbutyl)-N'-phenyl-p-phenylenediamine (6PPD), N,N'-dinaphthyl-p-phenylenediamine (DNPD), N-isopropyl-N'-phenyl-p-phenylenediamine (IPPD) and styrenated phenol (SP). The antioxidant is compounded in an amount of preferably 0.5 to 5 parts by weight per 100 parts by weight of the diene-based rubber. However, when the composition of the present invention is used in, for example, an absorption device of vibrational energy, such as seismic isolation, if the composition is not exposed outside, the antioxidant may not be used at all. The above additives can be used alone or as mixtures of two or more thereof.

The composition of the present invention is produced by kneading an unvulcanized rubber composition having those additives compounded therewith with e.g. a kneader or a Banbury mixer. The kneaded product is vulcanized by heating the same at a temperature of 130 to 170°C. Thus a vulcanized rubber composition is obtained.

The rubber composition for a laminate of the present invention obtained above contains isoprene rubber as a rubber component in a specific amount range. Therefore, only stress at high strain is decreased while maintaining stress at low strain.

The composition of the present invention showing the above properties is specifically that ratio (M₃₀₀/M₁₀₀) of modulus at high strain, for example, 300% strain (M₃₀₀), to modulus at low strain, for example 100% strain (M₁₀₀), is preferably 4.10 or lower, more preferably 3.90 to 4.05.

When the composition of the present invention showing such properties is used in a rubber laminate, shear strain at fracture can be increased while maintaining modulus of elasticity in shear and breaking strength of the rubber laminate high.

The rubber laminate using the rubber composition for a laminate of the present invention is generally obtained by alternately laminating a rubber composition and a hard plate such as iron plate, and is a structure that is used for, for example, supports of bridges or base seismic isolation of buildings.

The present invention is described in more detail by the following examples.

### EXAMPLES 1 TO 2 AND COMPARATIVE EXAMPLE 1

### Preparation of Rubber Composition

Compounds shown in Table 1 below (unit: parts by weight) except for a vulcanizing agent were formulated and the resulting mixture was kneaded with a B-type Banbury mixer for 5 minutes. The vulcanizing agent was kneaded with an 20,3 cm (8-inch) open roll. The unvulcanized rubber obtained was press-vulcanized at 148°C for 45 minutes.

### Properties of Rubber Composition

The rubber composition thus obtained was cut into a dumbbell specimen (JIS No.3) having a thickness of 2 mm, and 100% modulus (M₁₀₀) [MPa], 300% modulus (M₃₀₀) [MPa], tensile strength (T_{B}) [MPa], and elongation (E_{B}) [%] were measured in accordance with JIS K 6251. Further, a ratio (M₃₀₀/M₁₀₀) of 300% modulus to 100% modulus was calculated. A static modulus of elasticity in shear was also calculated.

The results obtained are shown in Table 1 below.

### Preparation of Miniature Laminate

The unvulcanized rubber composition obtained above was rolled. The unvulcanized rubber and a metal plate coated with vulcanizing adhesives based on elastomer for metal (135 mm x 135 mm x 3.0 mm) were alternately laminated and molded so as to have four rubber layers and three metal layers. The laminate was sandwiched between two distal steel plates (135 mm x 135 mm x 30 mm) coated with vulcanizing adhesives based on elastomer for metal, and the resulting assembly was press vulcanized at 130°C for 275 minutes to prepare a miniature laminate having one layer thickness of 3.0 mm.

### Properties of Laminate

Modulus of elasticity in shear at 175% strain under face pressure of 5.88 MPa and deformation frequency of 0.5 Hz was determined by a shear tester.

Shear was applied under compression of face pressure 5.88 MPa, and breaking strength [MPa] and shear strain at fracture [%] were measured.

The results obtained are shown in Table 1 below.

**Table 1**

| | Example 2 | Example 3 | Comparative Example 1 |
|---|---|---|---|
| NR | 70 | - | 100 |
| IR (cis 91%) | 30 | 100 | - |
| Carbon black | 50 | 50 | 50 |
| Zinc white | 3 | 3 | 3 |
| Stearic acid | 2 | 2 | 2 |
| Antioxidant | 2 | 2 | 2 |
| Aroma oil | 10 | 10 | 10 |
| Sulfur | 1.5 | 1.5 | 1.5 |
| Vulcanization accelerator | 1.2 | 1.2 | 1.2 |
| Tensile strength [MPₐ] | 24.90 | 24.40 | 25.15 |
| Elongation [%] | 640 | 680 | 620 |
| M₁₀₀ [MPₐ] | 1.78 | 1.79 | 1.73 |
| M₃₀₀ [MPₐ] | 7.09 | 7.06 | 7.47 |
| M₃₀₀/M₁₀₀ | 3.98 | 3.94 | 4.31 |
| Static modulus of elasticity in shear | 0.90 | 1.00 | 0.93 |
| Properties of laminate | | | |
| Modulus of elasticity in shear | 0.77 | 0.76 | 0.81 |
| Breaking strength [KN] | 176 | 173 | 178 |
| Shear strain at fracture [%] | 480 | 490 | 440 |

| | | | |
|---|---|---|---|
| Antioxidant: Noclack 6C, a product of Ouchishinko Chemical Industrial Co. Vulcanization accelerator: N-cyclohexyl-2-benzothiazole sulfenamide (CBS) | | | |

The rubber composition for a laminate having improved anti-fracture characteristics of the present invention decreases only stress at high strain while maintaining stress at low strain, and has high breaking strength and shear strain at fracture. When the rubber composition for a laminate of the present invention having such properties is used in a rubber laminate, a rubber laminate can be obtained, in which breaking strength is large and shear strain at fracture is large while maintaining modulus of elasticity in shear.

## Claims

1. A rubber composition for a laminate containing a rubber component comprising a diene-based rubber and 10 to 100 parts by weight of carbon black per 100 parts by weight of the diene-based rubber, wherein the rubber component contains
10 to 100% by weight of an isoprene rubber containing cis-1,4-polyisoprene in an amount of 91 to 92% in terms of isoprene unit;
90 to 0%.by weight of natural rubber, and wherein the rubber composition optionally further contains 1.0 to 4.5 parts by weight of a vulcanizing agent per 100 parts by weight of the diene-based rubber, and 0.5 to 5.0 parts by weight of a vulcanizing accelerator per 100 parts by weight of the diene-based rubble.

2. The rubber composition according to claim 1, wherein the diene-based rubber contains 30 to 50% by weight of the isoprene rubber and 70 to 50% by weight of the natural rubber.

3. A laminate comprising the rubber composition according to any of claims 1 or 2 and a hard plate, wherein the rubber composition and the hard plate are alternately laminated.

4. The laminate according to claim 3, wherein the hard plate is an iron plate.

5. The laminate according to claim 3, wherein the rubber composition is vulcanized after lamination.

## Patentansprüche

1. Kautschukzusammensetzung für ein Laminat, welche eine Kautschukkomponente enthält, welche einen Kautschuk auf Dienbasis und 10 bis 100 Gewichtsteile Ruß auf 100 Gewichtsteile des Kautschuks auf Dienbasis umfasst, wobei die Kautschukkomponente 10 bis 100 Gew.-% eines Isoprenkautschuks, welcher cis-1,4-Polyisopren in einer Menge von 91 bis 92% in Bezug auf Isopreneinheiten enthält, und
90 bis 0 Gew.-% Naturkautschuk enthält,
und wobei die Kautschukzusammensetzung gegebenenfalls weiter 1,0 bis 4,5 Gewichtsteile eines Vulkanisationsmittels auf 100 Gewichtsteile des Kautschuks auf Dienbasis und 0,5 bis 5,0 Gewichtsteile eines Vulkanisationsbeschleunigers auf 100 Gewichtsteile des Kautschuks auf Dienbasis enthält.

2. Kautschukzusammensetzung nach Anspruch 1, wobei der Kautschuk auf Dienbasis 30 bis 50 Gew.-% des Isoprenkautschuks und 70 bis 50 Gew.-% des Naturkautschuks enthält.

3. Laminat, welches die Kautschukzusammensetzung gemäß einem der Ansprüche 1 oder 2 und eine harte Platte umfasst, wobei die Kautschukzusammensetzung und die harte Platte alternierend laminiert sind.

4. Laminat gemäß Anspruch 3, wobei die harte Platte eine Eisenplatte ist.

5. Laminat gemäß Anspruch 3, wobei die Kautschukzusammensetzung nach dem Laminieren vulkanisiert ist.

## Revendications

1. Composition de caoutchouc pour un stratifié contenant un composant de type caoutchouc comprenant un caoutchouc à base de diène et 10 à 100 parties en poids de noir de carbone pour 100 parties en poids du caoutchouc à base de diène, dans laquelle le composant de type caoutchouc contient
10 à 100 % en poids d'un caoutchouc isoprène contenant du cis-1,4-polyisoprène en une quantité de 91 à 92 % en termes de motif isoprène:
90 à 0 % en poids de caoutchouc naturel,
et dans laquelle la composition de caoutchouc contient en outre facultativement 1,0 à 4,5 parties en poids d'un agent de vulcanisation pour 100 parties en poids du caoutchouc à base de diène, et 0,5 à 5,0 parties en poids d'un accélérateur de vulcanisation pour 100 parties en poids du caoutchouc à base de diène.

2. Composition de caoutchouc selon la revendication 1, dans laquelle le caoutchouc à base de diène contient 30 à 50 % en poids du caoutchouc isoprène et 70 à 50 % en poids du caoutchouc naturel.

3. Stratifié comprenant la composition de caoutchouc selon l'une quelconque des revendications 1 ou 2 et une plaque dure, dans lequel la composition de caoutchouc et la plaque dure sont stratifiées alternativement.

4. Stratifié selon la revendication 3, dans lequel la plaque dure est une plaque de fer.

5. Stratifié selon la revendication 3, dans lequel la composition de caoutchouc est vulcanisée après stratification.
